# EUROPEAN PATENT APPLICATION

(11) **EP 1 191 421 A2**
(43) Date of publication of application: **27.03.2002**
(21) Application number: 01307909.0
(22) Date of filing: 18.09.2001
(51) Int. Cl.: G06F 1/00

(54) **Tamper resistant software protection method with renewable security mechanism**

(30) Priority: 21.09.2000 US 667834
(71) Applicant: Matsushita Electric Industrial Co., Ltd., Kadoma-shi Osaka-fu, 571 (JP)
(72) Inventor: Bhattacharya, Prabir, Plainsboro, New Jersey 08536 (US)
(74) Representative: Burrington, Alan Graham Headford

(57) **Abstract**

A custodian applet is embedded in the digital content and suitable encryption processes are employed prior to sending the content over a distribution channel. At plural locations along the distribution channel, testing stations examine the content and utilize the embedded applet to determine if the integrity. of the digital content has been tampered with. If tampering is detected, the testing station alerts the content provider that tampering has occurred, whereupon the content provider changes the security mechanism to prevent further breach.

## Description

### BACKGROUND AND SUMMARY OF THE INVENTION

The present invention relates generally to computer software and digital media distribution. More particularly, the invention relates to a security method for distributing digital content that employs a custodian applet that is associated with the content and sends a message to the content provider if tampering is detected.

The distribution of computer software and other digital content, including multi-media content, video content, audio content, and the like, raises significant and legitimate concerns for the providers of that content. Because digital content can be copied perfectly, providers of digital content are reluctant to distribute it through public channels unless some form of copy protection or anti-copying measures are available. In this regard, perhaps the most popular form of protection is encryption. The plaintext digital content (which could represent any form of content, including video, audio, multi-media, executable computer software, and the like) is encrypted using a predetermined encryption algorithm or cipher prior to being sent through the distribution channel. The content provider gives the authorized end user the decryption key needed to reverse the encryption process, allowing the original digital content to be used. There are a variety of different mechanisms for distributing the decryption keys. Some systems employ symmetric cryptosystems, in which both content provider and content user have the same key. A popular alternative is the public key cryptosystem, where the end user is provided with a public key which is used to compute the decryption key using information generated during an exchange of information with the content provider who holds a private key.

Digital content can be delivered through a variety of different distribution channels. Computer software and digitally recorded audio and video are quite frequently delivered today using compact disc technology or digital video disc technology. In addition to these physical media distribution channels, digital content can also be delivered over satellite communication links, cable television communication links and a variety of different internet communication channels. Current bandwidth constraints with some of the internet distribution channels has provided the impetus for the development of a number of different compressed digital content formats. The MPEG format is currently popular for digital video; the MP3 format is currently popular for digital audio. There are numerous other formats as well.

Regardless of which distribution channel is used, there is an ever present risk that someone with sufficient equipment and skill will break the digital encryption code or re-record the digital content during unencrypted playback. Once this has occurred, unauthorized copies of the digital content can be produced and placed in commerce without the content provider's permission. Once encryption keys have been compromised, the content provider is at risk to losing even more content to digital piracy. What is needed, therefore, is a renewable security mechanism that the content provider can rely upon.

The present invention provides a tamper resistant digital content protection method that will detect when tampering has occurred and will alert the content provider so that encryption keys may be changed. While the pirated copy made by compromising the encryption system may still flow in the channels of commerce, the system notifies the content provider that a security breach has occurred, allowing the content provider to change the encryption keys for subsequent media distribution.

According to one aspect of the invention, the tamper resistant digital content protection method associates a custodian applet with a unit of digital content supplied by the content provider. This defines a unit of monitored digital content which is then routed through the distribution channel of choice. The distribution channel includes at least one integrity checking station where the applet is used to test the digital content to determine if it has been tampered with. If tampering is detected, the checking station sends a message to the content provider. In response to the message, the content provider can manually, or automatically, change any security mechanisms to prevent further security breach.

For more complete understanding of the invention, its objects and advantages, refer to the following specification and to the accompanying drawings.

### BRIEF DESCRIPTION OF THE DRAWINGS

Figure 1 is a data flow diagram illustrating a presently preferred embodiment of the tamper resistant digital content protection method with renewable security mechanism;
Figure 2 is a block diagram illustrating a frame of digital content, showing one technique for associating the custodian applet with a unit of digital content; and
Figure 3 is a communication sequence diagram illustrating how the custodian applet validates conditions to trigger the renewable security mechanism in an exemplary public key encryption distribution chain.

### DESCRIPTION OF THE PREFERRED EMBODIMENTS

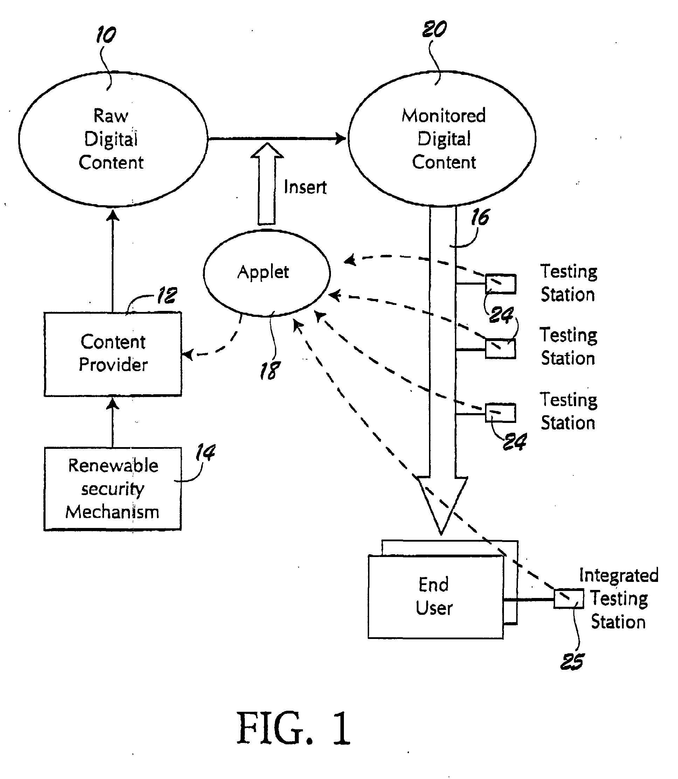

The tamper resistant protection method can be practiced in a variety of different media distribution environments. As noted previously, currently digital content is distributed both in tangible form, such as in compact disc or DVD form, and in communicated data form over a variety of different communication channels. Referring to Figure 1, the raw digital content **10** is produced by the content provider **12**. The content provider **12** may utilize a renewable security mechanism **14** which is used to encrypt the raw digital content as will be more fully explained below.

Prior to delivering the digital content to the distribution medium **16**, the content provider inserts a custodian applet **18** into the content **10,** thereby producing monitored digital content **20.**

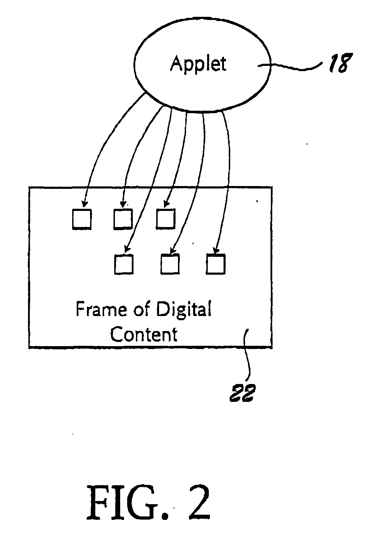

There are a variety of different ways to associate or embed the custodian applet into the digital content. Figure 2 illustrates one possible technique in which the applet **18** is actually impregnated into a frame of digital content in a distributed or dispersed fashion, This has the advantage of hiding the applet, making it less easy to identify and reverse engineer and also making the presence of the applet less "visible" when the digital content is used or played back by the end user, If desired, the applet can be inserted into each frame of digital content, or it can be instead added to a header or trailer memory location associated with the digital content.

Returning to Figure 1, once the applet is inserted, the monitored digital content is released to the distribution medium **16**. At predetermined points along the distribution chain, testing stations **24** access the monitored digital content, thereby causing the applet to execute. As will be more fully illustrated below, the applet validates conditions that must be fulfilled to utilize the digital content by an authorized end user or authorized party in the distribution chain. The testing station reports the successful validation performed by the applet, and further alerts the content provider of unsuccessful validation.

In response to a report of unsuccessful validation, the content provider changes the renewable security mechanism **14,** so that digital content sent through the distribution medium **16** thereafter will be protected differently. Thus, although a particular unit or item of digital content may have been compromised, the distribution system self-corrects so that the detected breach in security will not spread to future distributions.

There are many ways to protect digital content. Most rely on some form of encryption. In this regard, the public key cryptosystem is often preferred because it gives the content provider a great deal of flexibility in distributing decryption keys to end users in a secure way.

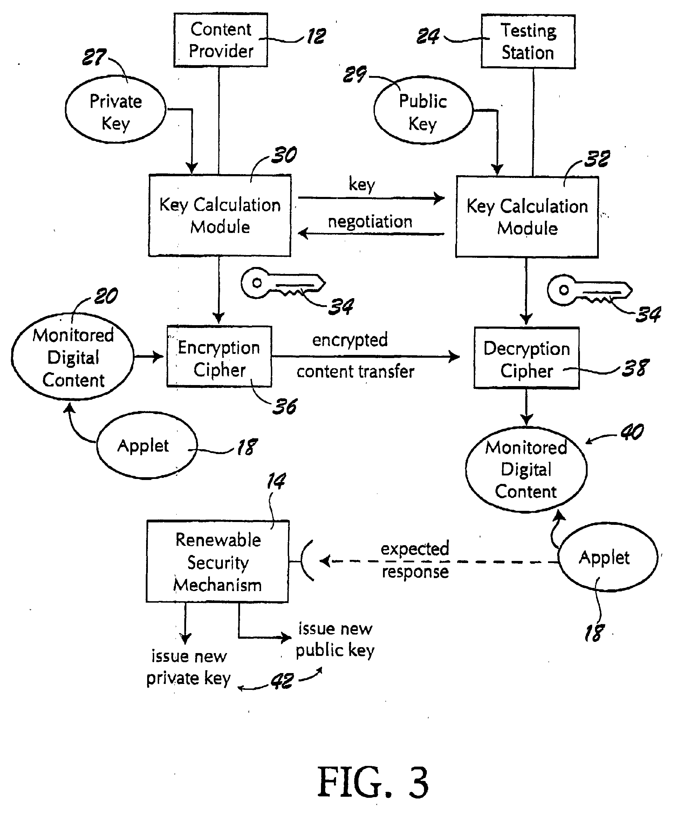

Figure 3 shows how the invention may be implemented using a public key cryptosystem. The content provider **12** uses the public key cryptosystem to encrypt the monitored digital content **20,** which includes the embedded custodian applet **18.** The testing station **24** decrypts this encrypted content to extract the applet **18,** as will be more fully described. The public key cryptosystem uses a pair of keys, a private key **27** and a public key **29** in conjunction with a pair of key calculation modules **30** and **32**. The key calculation module **30**, employed by the content provider, uses the private key and information received from key calculation module **32** to generate an encryption/decryption key **34.** The content provider supplies key **34** to an encryption cipher **36**, which encrypts the monitored digital content so that it can be sent through the distribution medium, The testing station **24** uses its key calculation module **32** to generate the encryption/decryption key **34**, which is used by the decryption cipher **38** to decrypt the monitored digital content. The key calculation module **32** uses the public key **29** and information received from module **30** in computing the encryption/decryption key.

Once the monitored digital content is decrypted, as illustrated at **40**, applet **18** is run by the testing station. The renewable security mechanism **14** associated with the content provider **12** expects a response from applet **18**, indicating that the validation conditions were fulfilled. If the renewable security mechanism **14** does not receive the expected response, or if it receives an alert message from applet **18** indicating that problems were encountered, the renewable security mechanism issues new private and public keys as depicted at **42**.

If desired, the renewable security method can also be practiced at the end user's location. As illustrated in Figure 1, a testing station **25** can be integrated into the consumer product used by the end user for viewing or using the digital content. In a case of a physically distributed media, the integrated testing station **25** can be incorporated into the media player. In a cable system, the integrated testing station can be integrated into the set top box or into the television tuner.

For added security, the content provider can change the custodian applet periodically. This change could be effected by altering the way the applet validates conditions to test whether a unit of digital content has been tampered with. Alternately, or additionally, the method of embedding the applet can be altered. For example, the data hiding techniques for embedding an applet within one or more frames of digital content can be periodically altered to make it more difficult to reverse engineer the security system.

In a further embodiment of the invention, the custodian applet is given the property of mobility. The applet flows through the distribution medium **16** as a mechanism for alerting the content provider that tampering has occurred.

While the invention has been described with respect to several of the presently preferred embodiments, it will be understood that the invention is capable of modification and extension to other technologies without departing from the spirit of the invention as set forth in the appended claims.

## Claims

1. A tamper resistant digital content protection method, comprising:
associating a custodian applet with a unit of digital content supplied by a content provider to define monitored digital content;
routing the monitored content through a distribution channel that includes at least one integrity checking station;
at said integrity checking station, using said applet to test whether said unit of digital content has been tampered with; and
if tampering is detected, using said applet to send a message to the content provider.

2. The method of claim 1 further comprising:
encrypting the unit of digital content according to a first predetermined cipher; and
changing said first predetermined cipher to a second predetermined cipher in response to said message.

3. The method of claim 1 wherein said applet performs said test to determine whether said unit of digital content has been tampered with.

4. The method of claim 1 wherein said distribution channel terminates at an end user site and wherein said end user site includes an integrity checking station whereby said the digital content is tested at the end user site.

5. The method of claim 1 wherein said distribution channel includes a communication channel and said applet sends said message through said distribution channel.

6. The method of claim 1 wherein said integrity checking station tests for the presence of said applet treats the digital content as having been tampered with if the presence applet is not detected.

7. The method of claim 1 further comprising developing said applet prior to associating it with a unit of digital content and wherein said developing step includes periodically changing how the applet is associated with a unit of digital content.

8. The method of claim 1 further comprising developing said applet prior to associating it with a unit of digital content and wherein said developing step includes periodically changing how the applet functions in said step of testing whether said unit of digital content has been tampered with.

9. The method of claim 1 further comprising encrypting the unit of digital content and wherein said applet validates the conditions that must be fulfilled to decrypt the encrypted digital content.

10. The method of claim 1 further comprising:
encrypting the unit of digital content according to a predetermined cipher; and
automatically altering said predetermined cipher for use in subsequent digital content distribution in response to said message.
